# EUROPEAN PATENT SPECIFICATION

(11) **EP 4 429 202 B1**
(45) Date of publication and mention of the grant of the patent: **04.11.2026**
(21) Application number: 23160980.1
(22) Date of filing: 09.03.2023
(51) Int. Cl.: G05B 19/042, G05B 23/02, H04L 67/12, H04W 4/38

(54) **METHOD FOR PROVIDING AN EFFICIENT COMMUNICATION IN A HIERARCHICAL NETWORK OF DISTRIBUTED DEVICES**
VERFAHREN ZUR BEREITSTELLUNG EINER EFFIZIENTEN KOMMUNIKATION IN EINEM HIERARCHISCHEN NETZWERK AUS VERTEILTEN VORRICHTUNGEN
PROCÉDÉ POUR FOURNIR UNE COMMUNICATION EFFICACE DANS UN RÉSEAU HIÉRARCHIQUE DE DISPOSITIFS DISTRIBUÉS

(43) Date of publication of application: 11.09.2024
(73) Proprietor: ABB SCHWEIZ AG, 5400 Baden (CH)
(72) Inventor: SCHLAKE, Jan Christoph, 64293 Darmstadt (DE); SARKAR, Santonu, 560076 Bangalore (IN); PLATENIUS-MOHR, Marie Christin, 69493 Hirschberg an der Bergstraße (DE); AMARLINGAM, Madapu, 501102 Vikarabad (IN); BORRISON, Reuben, 68723 Schwetzingen (DE)
(74) Representative: Maiwald GmbH

(56) References cited:
- CN-A- 115 668 084
- US-B2- 11 356 537

## Description

### FIELD OF THE INVENTION

The present invention relates to a method for providing an efficient communication in a hierarchical network of distributed devices.

### BACKGROUND OF THE INVENTION

In a modern automation system, edge nodes, client devices or edge devices are used to collect data and to run software applications to be used an industrial network process. The collected data are then transferred by the client devices to higher edge devices at a higher level or master devices to be stored in a central storage. Therefore, when specific data is required, one has always to access the central storage to get these data. The US 9 525 627 B2 A1 describes a system to transmit packages between a user device and a source network. The US 2020296186 A1 refers to a self-learning connected-device network. The CN115668084 A refers to a diagnostic device, a server, and a diagnostic method.

However, this classical approach to have a centralized data backbone is no longer useful when operating modern industrial processes. This is, as more and more data are made available to applications in the client devices, this data is usually high-frequency data and/or data with only a limited use for non-experts. As a result, a lot of bandwidth is wasted to transfer data which is afterwards not used any more if the classical approach is used by first sending data upward to a master device, e.g. a cloud, or higher edge nodes and then send it back to the lower edge node, where the data is consumed by an application.

There is a need to address these issues.

### SUMMARY OF THE INVENTION

Therefore, it would be advantageous to provide an improved concept for providing an efficient communication and an efficient data processing in a hierarchical network of distributed devices.

The object of the present invention is solved by the subject matter of the independent claims, wherein further embodiments are incorporated in the dependent claims.

In a first aspect of the present invention, there is provided a method of providing an efficient communication in a hierarchical network of distributed devices comprising at least a master device, at least a first client device, wherein the at least first client device is connected via a first communication interface with the master device, comprising the following steps:
- collecting first data from the at least first client device sent by at least one sensor device via a second communication interface;
- storing the received first data in a data storage of the at least one client device;
- determining, by the at least first client device, meta data of the first data;
- receiving, by the at least first client device, a requirement information of the first data;
- generating a classification information of the received first data, by the at least first client device, according to the meta data and the requirement information of the first data;
- providing the classification information of the first data by the at least first client device to the master device and / or to at least a second client device according to a rule information; and
- updating the classification information, when the first data is changed.

In other words, a core idea behind the present invention is to improve a dynamic assignment of data types of data locally generated by a client device or lower edge device more efficiently and to provide an overall data overview in a hierarchical network of distributed devices, as data generated locally is not only but now also shared between client devices of the same hierarchical level. Or to say it in other words, each edge device in the network is now aware where required data is stored and if needed, can be directly enquired from the edge device storing the required data.

For this, it is crucial that data received by a client device are classified or categorized in terms of the importance of the data by generating a classification information based on meta data indicating whether data should be shared with other devices or stored in a device and a requirement information indicating when and where data is needed at a certain time in the network.

The meta data may be generated using machine learning or other heuristic methods to decide for each edge the type of data in the edge and for how long data should be stored (change of status of the data) or to which location it should be transferred within the network. In this way, the knowledge of the topology of the edge network can be used to define optimal data handling strategies.

In this way, the data processing and communication in a hierarchical network of distributed devices becomes more efficient, as communication bandwidth and storage capacity is more efficiently used compared to the centralistic data processing approach.

For this, the hierarchical network or the system or platform comprises a number of client devices that are connected to other client devices and / or to at least one master device. The master device or higher-edge device usually executes a data-intensive data handling program, e.g. maschine learning. The at least one client device or the lower-edge device usually collects data from a plant device sensoring various types of data, e.g. temperature data, speed data.

At the client devices or lower edge devices, the classification information of data received is generated according to meta data defined by the client device. One task of the meta data is to classify the received data to a certain type of data such as raw data, hot data, warm data, cold data or cloud data.

Hot data or live data means that the latest data must be given as soon as possible when the edge or network infrastructure recovers connectivity from a failure. Application requires unprocessed, live telemetry data during training or during operation. Examples may be data for real time monitoring, prediction and actions. Hot data are data with an extremely high data availability requirement.

Warm data means that applicatrions need the latest data but at a low or medium priority, after connectivity restoration. Applications do not require new data or data is not generated very frequently. Data collected after a long interval is sufficient. Warm data can be used for complex measurements such as misalignment, time-frequency domain conversion, resonance analysis, narrow band envelope analysis, etc. Warm data can be used for retraining a machine learning model. Typical applications can be periodic health monitoring or prediction.

Cold or offline data means that there is no need to get the latest data in the immediate future. Applications require a mix of warm and historical data to build robust machine learning models from scratch or perform periodic retraining if the model performance is unsatisfactory.

The generated classification information is then distributed and shared by the client device among a master device and / or further client devices in the network. This can happen according to a defined rule information. In this way, even if data is not transmitted, all devices of the network are now aware of the available data which are existing in each of the devices as either as actual data or as virtual data.

When the data is changed, e.g. by an update of an installed local device in the network or a change of the network topology, the classification information of the respective local client device is updated, giving all other devices in the network also an immediate update of which data is available in the network and how expensive it is to get it, e.g. by using a distance metric.

In the context of the present invention, data is telemetry data, alarm data and / or event data that are routed between the devices of the network, but the present invention is not restricted to this field of application.

A further advantage of the present invention is that data availability, classification and configuration information is shared between local client / edge devices in an efficient manner to ensure consistency, e.g. by using a generalized configuration file.

A further advantage of the present invention is that detection of similar data becomes easier in a network. This is done by using for example a pattern detection method e.g., from ML to identify "stall" data or other patterns. This includes not only stationary data, but also for example seasonality, oscillations and change points. Using this information helps to avoid unnecessary data transmission.

According to an example, the classification information comprises at least one of the following: type or category of first data, cost of first data, availability or status of first data, a quality parameter of the first data that defines whether the first data fulfils a predefined quality in order to be usable by other devices in the network. Therein, the advantage is achieved that a more detailed and efficient data handling strategy when exchanging data among devices of the network can be applied.

According to an example, the classification information is generated by using a prediction model or a machine learning model. In this way, the classification information can be generated in a more efficient way.

According to an example, the rule information is locally stored in the first client device and shared with any other device in the network upon enquiry or in case of an update of the rule information, or the rule information is generated by the master device and globally distributed to any other device in the network. In this way, the advantage of an efficient and standardized data transmission in the network is achieved.

According to an example, the step of updating the classification information comprises a change of the at least following: meta data of first data, requirement information of first data, a configuration of the network by installing or removing at least a client device or master device and / or at least a sensor device. In this way, a data transmission in the network is improved when the classification information depicts any relevant change in the network or of a data availibility.

According to an example, the classification information is updated at least partially by the at least one master device. Therein, the advantage is achieved that a changed classification information can be efficiently distributed among the client devices connected to the master device of the network.

According to an example, the updating of the classification information is triggered by at least one of the following: additional first data becomes available, meta data (12) of the first data is changed or the requirement information 14 changes. In this way, a data transmission in the network is improved when the classification information depicts any relevant change in the network or of a data availibility.

According to an example, the requirement information defines a demand and supply of the first data among the distributed network. In this way, any device in the network is aware of an actual data location and data availability.

According to an example, the data storage is at least partially a local data storage in the at least first client device. In this way, security-sensitive data can be efficiently protected in the network.

In a second aspect of the present invention, a computer is provided comprising a processor configured to perform the method of the preceding aspect.

In a third aspect of the present invention, there is provided a computer program product comprising instructions which, when the program is executed by a processor of a computer, causes the computer to perform the method of any of the first and second aspects.

In a fourth aspect of the present invention, a machine-readable data medium and / or download product containing the computer program of the third aspect.

### BRIEF DESCRIPTION OF THE DRAWINGS

Exemplary embodiments will be described in the following with reference to the following drawings:
Fig. 1 illustrates a schematic flow-diagram of a method of the present invention; and
Fig. 2 illustrates a schematic flow-diagram of data processing between a master device and a client device according to an embodiment of the present invention.

### DETAILED DESCRIPTION OF THE DRAWINGS

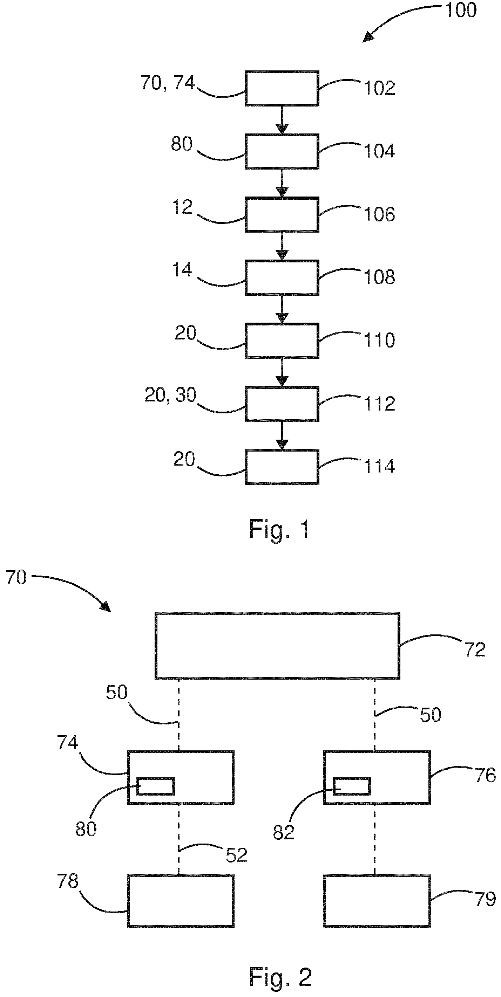

Fig. 1 illustrates a schematic flow-diagram of a method 100 of the present invention for providing an efficient communication in a hierarchical network 70 of distributed devices 72, 74, 76 comprising at least a master device 72, at least a first client device 74, wherein the at least first client device 74 is connected via a first communication interface 50 with the master device 72.

In first step 102, first data 10 is collected from the at least first client device 74 sent by at least one sensor device 78, e.g. a motor, a pump, via a second communication interface 52.

In a second step 104, the received first data 10 are stored in a data storage 80 of the at least one client device 74.

In a third step 106, meta data 12 of the first data 10 is determined by the at least first client device 74.

In a fourth step 108, a requirement information 14 of the first data 10 is received by the at least first client device 74.

In a fifth step 110, a classification information 20 of the received first data 10 is generated by the at least first client device 74 according to the meta data 12 and the requirement information 14 of the first data 10. The requirement information 14 defines a demand and supply of the first data 10 among the distributed network 70.

Regarding the classification information 20, the following can be said:
The classification information 20 comprises at least one of the following: type or category of first data 10, cost of providing first data 10 or cost processing first data 10, availability or status of first data 10, a quality parameter of the first data 10 that defines whether the first data 10 fulfils a predefined quality in order to be usable by other devices in the network 70.

Further, optionally, the classification information 20 is generated by using a prediction model or a machine learning model, e.g. a neuronal network, that is at least partly located in the at least first client device 74. Hence, the classification information 20 is then stored locally in the first client device 74.

Further, optionally, the classification information 20 is updated at least partially by the at least one master device 72.

In a sixth step 112, the classification information 20 of the first data 10 is provided by the at least first client device 74 to the master device 72 and / or to at least a second client device 76 according to a rule information 30.

The rule information 30 can be locally stored in the first client device 74 and shared with any other device in the network 70 upon enquiry or in case of an update of the rule information 30. Optionally, the rule information 30 can be generated by the master device 72 and then globally distributed to any other device in the network 70.

In a seventh step 114, the classification information 20 is updated, when the first data 12 is changed. The seventh step may also be optional in the present invention. The update of the classification information 20 can be triggered when
a) additional first data 10 becomes available or
b) meta data information 12 of the first data is changed or
c) data demand or the requirement information 14 changes.

Optionally, the step 114 of updating the classification information 20 comprises a change of the at least following: meta data 12 of first data 10, requirement information 14 of first data 10, a configuration of the network 70 by installing or removing at least a client device or master device and / or at least a sensor device.

Fig. 2 illustrates a schematic example of a distributed network 70 exchanging data according to a method of the present invention.

The distributed network 70 is established in a hierarchical manner between the master device 72 and the first client device 74 and the second client device 76 to perform the aforementioned method. The first client device 74 is connected via a second communication interface 52 to a sensor device 78 that senses or processes sensed data, e.g. a temperature value, a speed value, as first data 10. Correspondingly, the second client device 76 is connected via the second communication interface 52 to a sensor device 79. Both client devices 74, 76 are connected via a first communication interface 50 to the master device 72. For reasons of a better visibility data exchange between the first client device 74 and the second client device 76 is not indicated in Fig. 2, but of course, such a data exchange is present according to the method of the present invention. The first client device 74 comprises a data storage 80. The second client device 76 comprises a data storage 82.

The master device 72 can optionally be connected to an external data center, e.g. a cloud, for exchanging the data.

In the following, further detailed aspects of the present invention are provided.

### 1) Data Demand based on Meta Data

Each application can provide meta data about its data needs. This can be very specific (a single, specific data point is needed) or vague (all data of a specific type is needed). Very often this information is specified using tool specific formats. But there are also more and more standards or guidelines available. The meta data provides some more relevant information on the data such as a description, frequency, origin etc.

### 2) Global Data Manifesto

The global data manifesto or the requirement information 14 provides information from all other client edges about data demand and supply. The method of the present invention uses the global demand information to assign categories for local data.

### 3) Local Data Manifesto

The method of the present invention modifies the local data manifesto or classical information 20 based on various input. The local data manifesto describes where data is routed to and stored.

### 4) Prediction Model Learning Module

The Prediction Model Learning Module in a device of the network consists of two sub-modules:
a) The learning sub-module: Machine learning methods or statistical methods are using historical data sets [including information about features (which data source points) and labels (which data sinks)]. The result is a prediction model which can predict the most likely category (and hence data sink) based on the feature information.
b) The prediction sub-module: The latest prediction model is fed with current feature data to get a recommendation about best category.

### 5) Data Issue Detection Module

Data Routing only makes sense if the data quality is high enough to generate value in the target application. Hence, a data issue detection module is used to identify e.g. stall data. The information about faulty data is used by the method of the present information to modify the local data manifesto (= the classification information 20).

### 6) Data Matching Module

The data matching module uses application meta data and data source meta data to generate a local data manifesto. Therefore, the current rules, the latest prediction model, the information about data issues and the global data information from the data abstraction layer are used.

### 7) Rule Storage

All rules may be stored in a rule storage of a device of the network.

### 8) Data Categorization Module

The data categorization module may implement rules generated by the data matching module in a device of the network. If rules are changed, e.g. because a new application is installed, the data categorization module implements the adaped new rules.

### 9) Data Abstraction Layer

The data abstraction layer in a device 72, 74, 76 provides information about all globally available data in the network 70.

### 10) Hierarchical Edge Network

Today, edge devices are installed in process plants. In future, more and more edge devices will be installed in production sites, allowing the edge devices to form a network. Such a network can always be seen as a hierarchy with a higher-level (master) edge and a multitude of lower-level (client) edges.

The higher-level edge takes to role of an aggregator while the lower-level edges are mainly data collector. Applications can run in all edges taking into consideration the resource constraints. The simplest edge network runs two edges: One higher edge and one lower edge, but can be expanded in principle to an infinite number of devices.

An important aspect to take into consideration in such a hierarchical network is the communication in such a hierarchical edge network. To illustrate this, three examples are provided:

### A) Two-way Free Flow Communication

The ideal scenario: data can flow from and to all edges. The higher-level edge manages the lower-level edges. According to the method of the present invention, this is also the ideal situation:
A1) Data Connector are used to collect data from devices like motors and pumps or even Distributed Control Systems (DCS).
A2) A local Data Manifesto in a client device is created by the Data Matching Module of by assigning data to categories; the local data manifestos (= classification information) are shared with the higher-level edge to create the global data manifesto.
A3) Data flows to application according to the data manifesto using the rules implemented by the Data Categorization Module.
A4) In case of changes in data demand, e.g. a new MES application is installed, the local data manifesto of a client device is updated and implemented by the Data Categorization Module. Changes are shared with the higher (master) edge. At the same time the rules are updated (using heuristics or ML models generated by the Prediction Model Learning Module); new rules are also shared with higher (master) edge.
A5) The global manifesto in the master device is updated and changes are shared with all edges; new rules are also shared with all edges.

In a further communication scenario in a hierarchical network data can flow from and to the higher (master) edge device. The higher-level edge manages the lower-level (client) edge devices. For the present invention this means that global updates require manual intervention:
1) Data Connector are used to collect data from devices like motors and pumps or Distributed Control Systems
2) A local Data Manifesto is created by the Data Matching Module of a client device, assigning data to categories; the local data manifestos are shared with the higher-level edge to create the global data manifesto. The client devices are using initially installed rules.
3) Data flows to applications according to the data manifesto using the rules implemented by the Data Categorization Module.
4) In case of changes in data demand, e.g. a new MES application is installed, the local data manifesto of a client device is updated and implemented by the Data Categorization Module; changes are shared with the higher edge. At the same time the rules are updated (using heuristics or ML generated by the Prediction Model Learning Module); new rules are also shared with higher master edge device.
5) The global manifesto in the master device is updated; changes are shared manually with all client edges, e.g. when updates are made; new rules are also shared with all edges manually.

Compared to the previous scenario this one is more realistic but requires also the human in the loop to confirm updates.

In case the lower edges are not always connected to the higher master edge device, data can flow freely from and to all client edge devices. The higher-level master edge device manages the lower-level client edge devices, but has only access to them when they are connected. This scenario represents a flexible scenario where the network is under constant change. In this scenario, global updates are not always available:
1) Data Collector is collecting data from devices like motors and pumps
2) A local Data Manifesto of the client device is created by the Data Matching Module assigning data to categories. The local data manifestos are shared with the higher-level master edge devics to create the global data manifesto if connected. Initially installed rules in the client devices are used.
3) Data flows to applications according to the data manifesto implemented by the Data Categorization Module. Data flows only to the higher master edge device if connected.
4) In case of changes in data demand, e.g. a new application is installed, the local data manifesto is updated; changes are shared with the higher master edge device if connected. At the same time the rules are updated (using heuristics or ML generated by the Prediction Model Learning Module); new rules are also shared with higher edge if connected.
5) The global manifesto is updated; changes are shared manually with all devices, e.g. when updates are made; new rules are also shared with all edges manually if connected

In this scenario, the updates of the local manifesto will take significantly longer then with the other scenarios due to the communication limitations.

Further, there are multiple ways to improve the category assignment.

First, a simple way is using heuristics:
1. A user defines rules to assign status to data. Status can be something like hot, cold, or warm. Another differentiation can be the sink location for the data.
2. A generalized configuration file containing all available tags in all edges (client device and master device).
3. The expert rules are used to assign status for all tags; expert rules can be supported by statistics, e.g. how often requires a specific application data of a specific type. This helps to assign aspects like storage locations.
4. Status information is added to the generalized configuration file.
5. Generalized configuration file is shared with other edges.
6. Each edge aggregates information to get an overall status for each tag and to decide where to send data and store data.

Second, another way to improve assignment rules is machine learning if enough historical data is available, as described before.

### Reference signs

- 100: Method
- 100: Method
- 102: Collecting
- 104: Storing
- 106: Determining
- 108: Determining
- 110: Generating
- 112: Providing
- 114: Updating

- 10: First data
- 12: Meta data
- 14: Requirement information
- 20: Classification information
- 30: Rule information
- 50: First communication interface
- 52: Second communication interface
- 70: Hierarchical network
- 72: Master device
- 74: First client device
- 76: Second client device
- 78, 79: Sensor device
- 80, 82: Data storage

## Claims

1. Method (100) for providing an efficient communication in a hierarchical network (70) of distributed devices (72, 74, 76) comprising at least a master device (72), at least a first client device (74), wherein the at least first client device (74) is connected via a first communication interface (50) with the master device (72), comprising:
- collecting (102) first data (10) by the at least first client device (74) sent by at least one sensor device (78) via a second communication interface (52);
- storing (104) the received first data (10) in a data storage (80) of the at least first client device (74),
- determining (106), by the at least first client device (74), meta data (12) of the first data (10), **characterized by**:
- receiving (108), by the at least first client device (74), a requirement information (14) of the first data (10);
- generating (110) a classification information (20) of the received first data (10), by the at least first client device (74), according to the meta data (12) and the requirement information (14) of the first data (10), wherein the requirement information (14) defines a demand and supply of the first data (10) among the hierarchical network (70) of distributed devices (72, 74, 76);
- providing (112) the classification information (20) of the first data (10) by the at least first client device (74) to the master device (72) and / or to at least a second client device (76) according to a rule information (30), wherein the rule information (30) defines how and to which devices the classification information (20) is provided; and
- updating (114) the classification information (20), when the first data (12) is changed, wherein the classification information (20) is updated at the at least first client device giving the at least one master device (72) and the at least one second client device (76) also an immediate update.

2. Method (100) according to claim 1, wherein the classification information (20) comprises at least one of the following: type or category of first data (10), cost providing first data (10) or cost of processing of first data (10), availability or status of first data (10), a quality parameter of the first data (10) that defines whether the first data (10) fulfils a predefined quality in order to be usable by other devices in the network (70).

3. Method (100) according to claim 2, wherein the classification information (20) is generated by using a prediction model or a machine learning model.

4. Method (100) according to any of the preceding claims, wherein the rule information (30) is locally stored in the first client device (74) and shared with any other device in the network (70) upon enquiry or in case of an update of the rule information (30), or the rule information (30) is generated by the master device (72) and globally distributed to any other device in the network (70).

5. Method (100) according to any of the preceding claims, wherein the step (114) of updating the classification information (20) comprises a change of the at least following: meta data (12) of first data (10), requirement information (14) of first data (10), a configuration of the network (70) by installing or removing at least a client device or master device and / or at least a sensor device.

6. Method (100) according to any of the preceding claims, wherein the updating of the classification information (20) is triggered by at least one of the following: additional first data (10) becomes available, meta data (12) of the first data is changed or the requirement information 14 changes.

7. A computer comprising a processor configured to perform the method of any preceding claims 1 to 6.

8. A computer program product comprising instructions which, when the computer program is executed by a processor of a computer, causes the computer to perform the method of any of claims 1 to 6.

9. Machine-readable data medium containing the computer program according to claim 8.

## Patentansprüche

1. Verfahren (100) zum Bereitstellen einer effizienten Kommunikation in einem hierarchischen Netzwerk (70) verteilter Vorrichtungen (72, 74, 76), das mindestens eine Master-Vorrichtung (72) und mindestens eine erste Client-Vorrichtung (74) umfasst, wobei die mindestens eine erste Client-Vorrichtung (74) über eine erste Kommunikationsschnittstelle (50) mit der Master-Vorrichtung (72) verbunden ist, umfassend:
- Erfassen (102) erster Daten (10) durch die mindestens eine erste Client-Vorrichtung (74), die von mindestens einer Sensorvorrichtung (78) über eine zweite Kommunikationsschnittstelle (52) gesendet werden;
- Speichern (104) der empfangenen ersten Daten (10) in einem Datenspeicher (80) der mindestens einen ersten Client-Vorrichtung (74);
- Bestimmen (106) von Metadaten (12) der ersten Daten (10) durch die mindestens eine erste Client-Vorrichtung (74), **gekennzeichnet durch**:
- Empfangen (108) einer Anforderungsinformation (14) der ersten Daten (10) durch die mindestens eine erste Client-Vorrichtung (74);
- Erzeugen (110) einer Klassifikationsinformation (20) der empfangenen ersten Daten (10) durch die mindestens eine erste Client-Vorrichtung (74) gemäß den Metadaten (12) und der Anforderungsinformation (14) der ersten Daten (10), wobei die Anforderungsinformation (14) einen Bedarf und ein Angebot der ersten Daten (10) innerhalb des hierarchischen Netzwerks (70) verteilter Vorrichtungen (72, 74, 76) definiert;
- Bereitstellen (112) der Klassifikationsinformation (20) der ersten Daten (10) durch die mindestens eine erste Client-Vorrichtung (74) an die Master-Vorrichtung (72) und/oder an mindestens eine zweite Client-Vorrichtung (76) gemäß einer Regelinformation (30), wobei die Regelinformation (30) definiert, wie und an welche Vorrichtungen die Klassifikationsinformation (20) bereitgestellt wird; und
- Aktualisieren (114) der Klassifikationsinformation (20), wenn die ersten Daten (10) geändert werden, wobei die Klassifikationsinformation (20) in der mindestens einen ersten Client-Vorrichtung aktualisiert wird, wodurch auch der mindestens einen Master-Vorrichtung (72) und der mindestens einen zweiten Client-Vorrichtung (76) eine unmittelbare Aktualisierung gegeben wird.

2. Verfahren (100) nach Anspruch 1, wobei die Klassifikationsinformation (20) mindestens eines der Folgenden umfasst: Typ oder Kategorie der ersten Daten (10), Kosten der Bereitstellung der ersten Daten (10) oder Kosten der Verarbeitung der ersten Daten (10), Verfügbarkeit oder Status der ersten Daten (10), einen Qualitätsparameter der ersten Daten (10), der definiert, ob die ersten Daten (10) eine vorgegebene Qualität erfüllen, um durch andere Vorrichtungen im Netzwerk (70) verwendbar zu sein.

3. Verfahren (100) nach Anspruch 2, wobei die Klassifikationsinformation (20) unter Verwendung eines Vorhersagemodells oder eines Machine-Learning-Modells erzeugt wird.

4. Verfahren (100) nach einem der vorhergehenden Ansprüche, wobei die Regelinformation (30) lokal in der ersten Client-Vorrichtung (74) gespeichert wird und mit jeder anderen Vorrichtung im Netzwerk (70) auf Anfrage oder im Fall einer Aktualisierung der Regelinformation (30) geteilt wird, oder wobei die Regelinformation (30) durch die Master-Vorrichtung (72) erzeugt und global an jede andere Vorrichtung im Netzwerk (70) verteilt wird.

5. Verfahren (100) nach einem der vorhergehenden Ansprüche, wobei der Schritt (114) des Aktualisierens der Klassifikationsinformation (20) eine Änderung von mindestens Folgendem umfasst: Metadaten (12) der ersten Daten (10), Anforderungsinformation (14) der ersten Daten (10), eine Konfiguration des Netzwerks (70) durch Installieren oder Entfernen mindestens einer Client-Vorrichtung oder Master-Vorrichtung und/oder mindestens einer Sensorvorrichtung.

6. Verfahren (100) nach einem der vorhergehenden Ansprüche, wobei das Aktualisieren der Klassifikationsinformation (20) durch mindestens eines der Folgenden ausgelöst wird: zusätzliche erste Daten (10) werden verfügbar, Metadaten (12) der ersten Daten werden geändert oder die Anforderungsinformation (14) ändert sich.

7. Computer, umfassend einen Prozessor, der dazu eingerichtet ist, das Verfahren nach einem der vorhergehenden Ansprüche 1 bis 6 durchzuführen.

8. Computerprogrammprodukt, umfassend Anweisungen, die, wenn das Computerprogramm durch einen Prozessor eines Computers ausgeführt wird, den Computer veranlassen, das Verfahren nach einem der Ansprüche 1 bis 6 durchzuführen.

9. Maschinenlesbares Datenträgermedium, das das Computerprogramm nach Anspruch 8 enthält.

## Revendications

1. Procédé (100) pour fournir une communication efficace dans un réseau hiérarchique (70) de dispositifs distribués (72, 74, 76) comprenant au moins un dispositif maître (72), au moins un premier dispositif client (74), dans lequel l'au moins premier dispositif client (74) est connecté via une première interface de communication (50) au dispositif maître (72), comprenant :
- la collecte (102), par l'au moins premier dispositif client (74), de premières données (10) envoyées par au moins un dispositif capteur (78) via une deuxième interface de communication (52) ;
- la mémorisation (104) des premières données (10) reçues dans une mémoire de données (80) de l'au moins premier dispositif client (74),
- la détermination (106), par l'au moins premier dispositif client (74), de métadonnées (12) des premières données (10), **caractérisé par** :
- la réception (108), par l'au moins premier dispositif client (74), d'informations d'exigence (14) des premières données (10) ;
- la génération (110), par l'au moins premier dispositif client (74), d'informations de classification (20) des premières données (10) reçues conformément aux métadonnées (12) et aux informations d'exigence (14) des premières données (10), dans lequel les informations d'exigence (14) définissent une demande et une fourniture des premières données (10) au sein du réseau hiérarchique (70) de dispositifs distribués (72, 74, 76) ;
- la fourniture (112), par l'au moins premier dispositif client (74), des informations de classification (20) des premières données (10) au dispositif maître (72) et/ou à au moins un second dispositif client (76) conformément à des informations de règle (30), dans lequel les informations de règle (30) définissent comment et à quels dispositifs les informations de classification (20) sont fournies ; et
- la mise à jour (114) des informations de classification (20), lorsque les premières données (12) sont modifiées, dans lequel les informations de classification (20) sont mises à jour sur l'au moins premier dispositif client en fournissant également une mise à jour immédiate à l'au moins un dispositif maître (72) et à l'au moins un second dispositif client (76).

2. Procédé (100) selon la revendication 1, dans lequel les informations de classification (20) comprennent au moins l'un des éléments suivants : le type ou la catégorie de premières données (10), le coût de fourniture des premières données (10) ou le coût de traitement des premières données (10), la disponibilité ou l'état des premières données (10), un paramètre de qualité des premières données (10) qui définit si les premières données (10) satisfont une qualité prédéfinie pour pouvoir être utilisées par d'autres dispositifs dans le réseau (70).

3. Procédé (100) selon la revendication 2, dans lequel les informations de classification (20) sont générées en utilisant un modèle de prédiction ou un modèle d'apprentissage automatique.

4. Procédé (100) selon l'une quelconque des revendications précédentes, dans lequel les informations de règle (30) sont stockées localement dans le premier dispositif client (74) et partagées avec tout autre dispositif dans le réseau (70) lors d'une demande ou en cas de mise à jour des informations de règle (30), ou les informations de règle (30) sont générées par le dispositif maître (72) et distribuées globalement à tout autre dispositif dans le réseau (70).

5. Procédé (100) selon l'une quelconque des revendications précédentes, dans lequel l'étape (114) de mise à jour des informations de classification (20) comprend une modification d'au moins les éléments suivants : des métadonnées (12) de premières données (10), des informations d'exigence (14) de premières données (10), une configuration du réseau (70) par installation ou suppression d'au moins un dispositif client ou dispositif maître et/ou d'au moins un dispositif capteur.

6. Procédé (100) selon l'une quelconque des revendications précédentes, dans lequel la mise à jour des informations de classification (20) est déclenchée par au moins l'un des éléments suivants : des premières données (10) supplémentaires deviennent disponibles, des métadonnées (12) des premières données sont modifiées ou les informations d'exigence (14) changent.

7. Ordinateur comprenant un processeur configuré pour mettre en œuvre le procédé selon l'une quelconque des revendications 1 à 6.

8. Produit de programme d'ordinateur comprenant des instructions qui, lorsque le programme d'ordinateur est exécuté par un processeur d'un ordinateur, amènent l'ordinateur à mettre en œuvre le procédé selon l'une quelconque des revendications 1 à 6.

9. Support de données lisible par machine contenant le programme d'ordinateur selon la revendication 8.
